(19) Europäisches Patentamt
European Patent Office
Office européen des brevets

(11) **EP 3 386 653 B1**

(12) **FASCICULE DE BREVET EUROPEEN**

(45) Date de publication et mention
de la délivrance du brevet:
**08.01.2020 Bulletin 2020/02**

(21) Numéro de dépôt: **16808608.0**

(22) Date de dépôt: **06.12.2016**

(51) Int Cl.:
**B08B 7/02** *(2006.01)*

(86) Numéro de dépôt international:
**PCT/EP2016/079902**

(87) Numéro de publication internationale:
**WO 2017/097769 (15.06.2017 Gazette 2017/24)**

(54) **PROCEDE POUR FAVORISER LE GLISSEMENT D'AU MOINS UNE GOUTTE SUR UN SUPPORT**

VERFAHREN ZUR UNTERSTÜTZUNG DES GLEITENS VON MINDESTENS EINEM TROPFEN AUF EINEM TRÄGER

METHOD FOR ASSISTING THE SLIDING OF AT LEAST ONE DROP ON A SUPPORT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2015 FR 1562067**

(43) Date de publication de la demande:
**17.10.2018 Bulletin 2018/42**

(73) Titulaires:
• **Université de Lille**
**59800 Lille (FR)**
• **Centre National de la Recherche Scientifique (CNRS)**
**75794 Paris Cedex 16 (FR)**
• **Ecole Centrale De Lille**
**59650 Villeneuve d'Ascq (FR)**

(72) Inventeurs:
• **BUSSONNIERE, Adrien**
**Edmonton T5K 1J6 (CA)**
• **BOU MATAR-LACAZE, Olivier**
**59230 Saint-amand-les-eaux (FR)**
• **BAUDOIN, Michaël**
**59260 Lezennes (FR)**
• **BRUNET, Philippe**
**75013 Paris (FR)**

(74) Mandataire: **Nony**
**11 rue Saint-Georges**
**75009 Paris (FR)**

(56) Documents cités:
EP-A1- 2 663 475     WO-A1-2013/004962
GB-A- 2 518 136     JP-A- H08 140 898

**Description**

La présente invention concerne un procédé pour faciliter le glissement d'au moins une goutte d'un liquide sur un support.

Dans des domaines variés, il est nécessaire de s'affranchir des effets liés à l'accumulation d'un liquide sur une surface. Par exemple, dans le cas d'applications médicales, il peut s'avérer nécessaire d'empêcher ou tout au moins de retarder la coagulation d'une goutte de sang sur une surface, sans avoir recours à l'ajout d'un agent anticoagulant. Dans le domaine optique, la condensation de gouttes d'eau sur une lentille peut empêcher une observation correcte et il alors nécessaire de procéder à son nettoyage, ce qui s'avère fastidieux. A titre d'exemple supplémentaire, l'accumulation de condensats de produits de combustion ou de gouttes de carburant sur certaines pièces d'un moteur peut en diminuer le rendement énergétique.

Il peut aussi être utile de contrôler précisément le déplacement des gouttes sur une surface.

Pour évacuer les gouttes de liquide accumulées sur une surface, il est bien connu d'appliquer un effort mécanique sur les gouttes, par exemple au moyen d'un essuie-glace sur un pare-brise d'un véhicule automobile. Toutefois, un essuie-glace limite le champ de vision accessible au conducteur. Il étale en outre les particules grasses déposées en surface du pare-brise. De plus, il est nécessaire de renouveler les garnitures de l'essuie-glace régulièrement. Par ailleurs, un effort mécanique sur les gouttes ne peut pas être aisément appliqué dans un grand nombre d'applications, par exemple en microfluidique par manque d'espace disponible pour disposer des moyens mécaniques adaptés qui pourraient de plus endommager les surfaces.

Une voie connue pour évacuer des gouttes accumulées sur une surface consiste à fonctionnaliser cette surface. Par exemple, les demandes US 2014/0817666 et US 2014/290732 décrivent un support recouvert d'un corps poreux dont les pores présentent une taille nanométrique ou micrométrique, formant ainsi une surface fonctionnalisée. Lorsqu'une goutte de liquide est déposée sur cette surface fonctionnalisée, le corps poreux est imbibé par le liquide, formant ainsi une couche de lubrification entre le support et la goutte qui peut aisément glisser sur la surface. Cependant, le nombre de matériaux constitutifs des supports adaptés à la fonctionnalisation de surface est limité. En outre, la fonctionnalisation de surface peut modifier d'autres propriétés de surface que la mouillabilité. Elle est par exemple de faible intérêt pour les applications impliquant les propriétés optiques des surfaces. Enfin, après plusieurs cycles d'imbibition et de séchage de la surface, les pores du corps poreux se remplissent progressivement par accumulation des particules résiduelles contenues dans le liquide, et la couche de lubrification finit par ne plus pouvoir se former. La surface fonctionnalisée perd alors son aptitude à favoriser le glissement de la goutte.

La mise en œuvre d'un champ électrique pour contrôler l'hydrophobicité d'une surface est aussi connue, notamment dans le domaine de la microfuidique. Cette technique, connue sous l'acronyme EWOD (pour « Electro Wetting On Devices » en anglais) consiste à appliquer une différence de potentiel entre deux électrodes, de sorte à polariser électriquement la surface pour la rendre hydrophile, déliant ainsi la goutte de la surface. En contrôlant la localisation de la polarisation, la goutte peut alors être déplacée. Cependant, peu de matériaux sont adaptés à cette technique, qui en outre est inadaptée à des supports de forte épaisseur. De plus, la technique EWOD nécessite un positionnement particulièrement précis des électrodes sur toute la surface où l'on veut contrôler les propriétés de mouillage.

Il est encore connu d'évacuer des gouttes en faisant vibrer le support sur lequel elles reposent, notamment en générant une onde de surface ultrasonore de façon à provoquer le déplacement des gouttes en surface ou à vaporiser les gouttes. Les ondes de surfaces ultrasonores présentent l'avantage de pouvoir être aisément générées au moyen d'un transducteur. En outre, elles sont peu atténuées et peuvent se propager sur de grandes distances.

GB 2 387 107 et GB 1 037 787 décrivent respectivement une visière de casque et un pare brise comportant un transducteur pour générer une onde ultrasonore pour enlever des gouttes de pluie. Ces documents sont toutefois silencieux quant aux caractéristiques de l'onde ultrasonore.

US 4,768,256 décrit un dispositif pour déplacer des gouttes de pluie d'un pare-brise, dans lequel une onde ultrasonore appliquée sur le pare-brise amène les gouttes de pluie à se déplacer dans le sens opposé au sens de propagation de l'onde ultrasonique longitudinale.

Dans l'article « Low power sessile droplets actuation via modulated surface acoustic », M. Baudoin, P. Brunet, O. Bou Matar et E. Herth, Appl. Phys. Lett., vol. 100, 154102 (2012), il a été récemment décrit un procédé dans lequel une onde de surface ultrasonore est appliquée à un support sur lequel une goutte d'eau est disposée, avec une fréquence et une amplitude telles que la goutte vibre et se déforme selon un mode asymétrique, entraînant son déplacement selon le sens de propagation de l'onde de surface ultrasonore.

FR 1 308 877 et WO 2012/095643 décrivent un procédé pour évacuer les gouttes de pluie d'un pare-brise par vaporisation ultrasonique. Les amplitude et fréquence de vibration sont choisies de sorte que les gouttes de pluie tombant sur le pare-brise ne puissent entrer en contact avec ce dernier, et soient vaporisées dès qu'elles entrent dans la zone de mouvement vibratoire de la surface du pare-brise.

Toutefois, afin d'obtenir une vaporisation ou un déplacement d'une goutte de liquide, les puissances nécessaires à la mise en vibration d'un des supports tels que décrits sont particulièrement élevées, ce qui limite leur mise en œuvre pratique, notamment pour le développement de dispositifs autonomes. En particulier, bien que FR 1 308 877 et WO 2012/095643 ne spécifient pas les amplitudes et fréquences des ondes générées pour vaporiser les gouttes, il est toutefois bien connu que la vaporisation nécessite des énergies supérieures à celles nécessaires pour déplacer des gouttes sur un support.

Il existe donc un besoin pour un procédé pouvant être aisément mis en œuvre, permettant d'évacuer une goutte d'un liquide accrochée à la surface d'un support, et s'appliquant à des supports de forme, de taille et de matériau constitutif variés.

L'invention vise à satisfaire ce besoin, et elle y parvient en proposant un procédé pour favoriser le glissement d'au moins une goutte sur un support, procédé dans lequel une onde de surface ultrasonore est générée dans le support avec une amplitude suffisante pour amener la goutte à se déformer selon un mode inertio-capillaire de vibration propre réduisant ainsi l'accrochage de la goutte au support, de façon à faciliter le déplacement de la goutte sous l'effet d'une force externe, l'amplitude de l'onde de surface ultrasonore étant insuffisante pour entraîner une déformation asymétrique de la goutte au point de l'amener à se déplacer en l'absence de la force externe dans le sens de propagation de l'onde de surface ultrasonore.

GB 2 518 136 A décrit un dispositif pour nettoyer des précipitations sur un pare-brise, un casque de moto ou un vitrage d'une fenêtre. Le dispositif comporte un ou plusieurs transducteurs générant des ondes qui se propagent dans la couche supérieure du pare-brise.

Le procédé selon l'invention est particulièrement remarquable en ce que la goutte est libérée des irrégularités du support qui empêchaient son mouvement au moyen d'une onde ultrasonore de plus faible puissance que celle employée dans les procédés de l'art antérieur décrits ci-dessus. La goutte peut alors être déplacée plus facilement via l'application de la force externe, notamment de faible amplitude. Par libération de la goutte, on entend que les vibrations inertio-capillaires de la goutte permettent de libérer la ligne de contact ou ligne triple (en contact à la fois avec le support, la goutte, et le gaz environnant, par exemple de l'air) initialement piégée dans des irrégularités, notamment chimiques et mécaniques de la surface.

En outre, le procédé selon l'invention est particulièrement robuste en ce qu'il permet de contrôler activement les vibrations de la surface et donc de la goutte. Par conséquent, il est possible d'adapter les vibrations de la surface en fonction de l'état de la surface. Le procédé selon l'invention est ainsi moins sensible aux pollutions et défauts de surface du support que les procédés de l'art antérieur.

De plus, le procédé selon l'invention permet aussi de contrôler précisément le déplacement de la goutte sur le support.

Le rendement énergétique supérieur du procédé selon l'invention peut être attribué au fait que dans l'art antérieur, la goutte est déplacée en surface du support sans vibration des lignes de contact. Il est donc nécessaire de fournir suffisamment d'énergie à la goutte pour dépasser l'angle dit d'hystérésis, à partir duquel les lignes de contact sortent des pièges constitués par les irrégularités, pour parvenir à déplacer la goutte. Un apport d'énergie plus élevé qu'avec le procédé selon l'invention est ainsi nécessaire pour la déplacer. En particulier, la puissance de l'onde ultrasonore de surface employée dans le procédé selon l'invention pour favoriser le glissement d'une goutte peut être au moins 10 fois, voire même au moins 30 fois, plus faible que la puissance d'une onde ultrasonore employée dans l'art antérieur pour déplacer une goutte.

Par ailleurs, comme cela apparaîtra par la suite, le procédé selon l'invention est particulièrement versatile. Notamment, il peut être mis en œuvre sur une gamme large de supports, micrométrique ou de plusieurs dizaines de mètres de longueur, dès lors qu'ils présentent une rigidité suffisante pour qu'une onde de surface ultrasonore puisse s'y propager, aussi bien fins qu'épais. De même, le procédé selon l'invention n'est pas limité à un type spécifique de liquide.

L'invention est ainsi de mise en œuvre simplifiée, et notamment ne nécessite pas de traitement spécifique et complexe de la surface du support.

De manière surprenante et jusqu'à présent inexpliquée, il a été observé que la vibration selon le mode inertio-capillaire de la goutte s'effectue à une basse fréquence inférieure, en particulier au moins 60 000 fois inférieure, voire 1 million de fois inférieure à la fréquence fondamentale de l'onde de surface ultrasonore. Par ailleurs, il a été constaté qu'il est possible d'amener des gouttes de diamètre varié à vibrer selon leur mode propre inertio-capillaire en sollicitant la surface avec une onde de même fréquence fondamentale. Ainsi une onde de même fréquence peut mettre en vibration des gouttes de tailles très différentes.

Un « mode inertio-capillaire de vibration propre » d'une goutte est un mode de résonance d'oscillation de la goutte résultant d'une compétition entre l'inertie de la goutte et la tension de surface de la goutte. Il a été mis en évidence par J. Rayleigh, Proc. R. Soc. London, vol. 29, 71 (1879) et de H. Lamb, « Hydrodynamics », Cambridge University Press, Angleterre (1932). Il est aussi généralement dénommé mode de Rayleigh-Lamb.

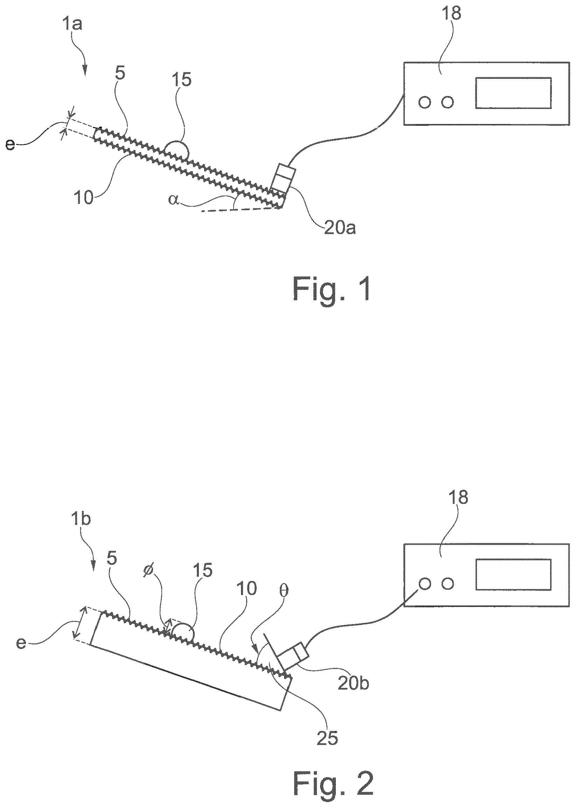

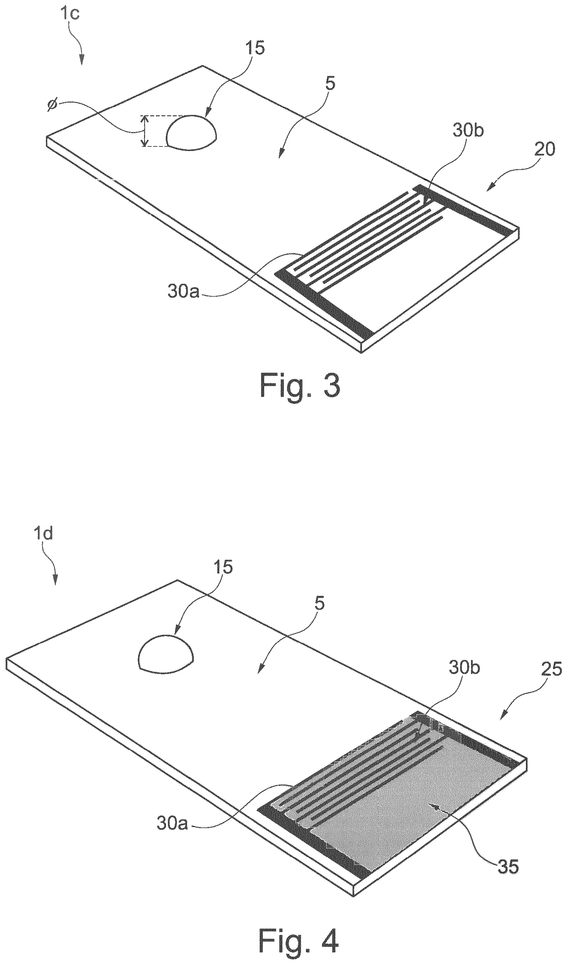

L'invention pourra être mieux comprise à la lecture de la description détaillée qui va suivre, d'exemples de mise en œuvre non limitatifs de celle-ci, et à l'examen du dessin annexé, sur lequel les figures 1 et 4 représentent schématiquement différents dispositifs pour mettre en œuvre le procédé selon l'invention.

Dans le dessin annexé, les proportions réelles des divers éléments constitutifs n'ont pas été toujours été respectées dans un souci de clarté.

Les figures 1 à 4 illustrent des dispositifs 1a-d pour mettre en œuvre le procédé selon l'invention, comportant un support 5 apte à propager une onde de surface ultrasonore 10, une goutte de liquide 15 et un moyen 20 pour générer l'onde de surface ultrasonore.

## SUPPORT

Le support 5 peut être en tout matériau apte à propager une onde de surface ultrasonore 10. De préférence, il est en un matériau présentant un module d'élasticité supérieur à 0,1 MPa, par exemple supérieur à 10 MPa, voire supérieur à 100 MPa, voire même supérieur à 1000 MPa, voire encore supérieur à 10000 MPa. Un matériau présentant un tel module d'élasticité présente une rigidité particulièrement adaptée à la propagation d'ondes de surface ultrasonore.

Le support peut être flexible, au sens où il peut se déformer, notamment élastiquement, sans rompre sous son propre poids.

En particulier, il peut être choisi parmi les matériaux piézoélectriques, les polymères, en particulier les thermoplastiques, les verres, les métaux et les céramiques.

La surface du support sur laquelle l'onde de surface longitudinale se propage peut être plane. Elle peut aussi être courbe, sous réserve que le rayon de courbure de la surface soit supérieur à la longueur d'onde de l'onde de surface ultrasonore.

La surface peut être rugueuse et présenter une rugosité Ra inférieure à la longueur d'onde.

Le support peut notamment se présenter sous la forme d'une plaque plane, comme cela est par exemple illustré sur la figure 1, ou présentant au moins une courbure selon une direction, dont l'épaisseur e est inférieure à 0,01 m. La longueur de la plaque peut être supérieure à 0,1 m, voire supérieure à 1 m, voire même supérieure à 10 m.

Par « épaisseur du support », on considère la plus petite dimension du support mesurée selon une direction perpendiculaire à la surface sur laquelle se propage l'onde ultrasonore.

En variante, le support peut présenter la forme d'un bloc, dont l'épaisseur est par exemple supérieure à 0,05 m, voire supérieure à 0,1 m, comme cela est par exemple illustré sur la figure 2.

Le support peut être disposé à plat par rapport à l'horizontale. En variante, il peut être incliné par rapport à l'horizontale d'un angle $\alpha$ supérieur à 10°, voire supérieur à 20°, voire supérieur à 45°, voire supérieur à 70°. Il peut être disposé verticalement.

Dans un mode de réalisation, le support est en un matériau optiquement transparent, notamment à la lumière dans le visible. Le procédé selon l'invention est alors particulièrement adapté aux applications dans lesquelles l'amélioration du confort visuel d'un utilisateur observant son environnement à travers le support est recherchée.

Un matériau optiquement transparent est notamment adapté pour former en tout ou partie :

- un vitrage d'un véhicule, notamment un pare-brise, un vitrage latéral ou une lunette arrière d'un véhicule automobile,
- une vitre d'un bâtiment,
- une lentille d'un dispositif optique choisi parmi un verre de lunette, une longue vue, un télescope, un microscope, un objectif photographique, une paire de jumelles, un rétroviseur.

Pour les applications où de tels supports sont employés, le procédé selon l'invention permet de réduire la densité surfacique de gouttes au contact du matériau transparent. Comme décrit précédemment, le procédé selon l'invention libère les gouttes du support, et les évacue au moyen de la force externe. On évite ainsi la formation d'amas liquides par cohésion des gouttes se déplaçant au contact de la surface comme dans les procédés de l'art antérieur, ces amas liquides modifiant les propriétés optiques du support.

Notamment, le procédé selon l'invention peut être mis en œuvre de sorte que le support soit auto-nettoyant.

D'autres types de support sont envisageables. Notamment, le support peut être un substrat d'un laboratoire sur puce, notamment destiné à des applications microfluidiques. Il peut être une paroi interne d'un moteur à combustion. Le procédé selon l'invention peut ainsi améliorer le rendement du moteur, en évacuant efficacement les gouttes se formant sur la paroi par condensation des produits de combustion ou par dépôt des gouttes de combustible non consommées. Le support peut être un élément d'une turbine, par exemple une aube, notamment d'un moteur d'avion.

Il peut être un câble électrique. Par exemple, dans la variante où le support est un câble électrique d'une ligne à haute tension électrique et/ou d'alimentation de voie ferrée, le procédé selon l'invention, en favorisant le glissement des gouttes de pluie se déposant sur le câble électrique, réduit les effets de mise en vibration par la pluie du câble électrique et des poteaux le supportant. En outre, en période hivernale, le procédé selon l'invention, en favorisant le glissement des gouttes de pluie se déposant sur le câble électrique, limite la formation de givre ou de glace sur les câbles. Ainsi, le risque d'endommagement, voire de rupture des câbles est réduit.

Le support peut être un élément de la structure d'un aéronef, par exemple une aile, un fuselage ou un empennage. Comme décrit au paragraphe précédent, le procédé selon l'invention, en favorisant le glissement des gouttes, sur ces éléments, limite la formation de givre ou de glace sur la structure de l'aéronef.

Le support peut être un élément d'un implant médical. En particulier, l'amplitude et la fréquence fondamentale de l'onde ultrasonore de surface peuvent être choisies de sorte à favoriser le glissement d'une goutte de sang pour éviter sa coagulation, ou d'un liquide biologique, pour éviter le dépôt de la matière biologique contenue dans le liquide biologique sur la surface.

Le support peut encore être choisi parmi un élément d'un échangeur de chaleur, une installation de plomberie, un élément d'un système de ventilation, un élément d'un système d'extraction de pétrole d'un puit, par exemple un tube. De tels supports présentent généralement des surfaces auxquelles il est difficile d'accéder pour évacuer les gouttes de liquide qui s'y déposent, par exemple par condensation. Le procédé selon l'invention est donc particulièrement adapté à ce type de supports.

Le support peut être un élément de stockage de nourriture, par exemple une paroi interne d'un réfrigérateur, ou une paroi exposée à la condensation d'un liquide. Par exemple, dans un réfrigérateur, la condensation des gouttes d'eau sur une paroi augmente l'échange thermique entre la paroi et le volume d'air frais du réfrigérateur, réduisant son rendement.

Comme cela a déjà été illustré précédemment, le procédé selon l'invention peut être mis en œuvre dans des applications ou de hautes températures sont rencontrées. De préférence alors, la température de surface du support est supérieure à 100°C, voire supérieure à 300°C, voire encore supérieure à 500°C.

## GOUTTE DE LIQUIDE

Dans un mode de réalisation préféré, la surface du support est au moins partiellement recouverte par une pluralité de gouttes de liquide.

La goutte 15 de liquide peut présenter une taille au repos $\Phi$ inférieure à 5 mm, notamment comprise entre 0,1 mm et 1,5 mm, par exemple égale à 1 mm. Par « taille au repos » de la goutte, on entend la distance entre le point de la goutte le plus éloigné de la surface et cette dernière, sans qu'aucune onde de surface longitudinale ne soit appliquée au support. Dans la présente description, lorsqu'il est fait référence à la taille de la goutte, il s'agit de la taille au repos de ladite goutte, sauf mention contraire.

Le support peut être recouvert d'une pluralité de gouttes présentant une distribution multimodale de tailles de gouttes. De préférence alors, une pluralité d'ondes de surface ultrasonores est générée dans le support, avec des fréquences fondamentales et amplitudes adaptées à amener chaque goutte de la pluralité de gouttes à se déformer selon un mode inertio-capillaire de vibration.

Le procédé selon l'invention est particulièrement versatile en ce qu'il permet de favoriser le glissement de gouttes constituées de liquide aux propriétés variées. A titre d'exemple, la viscosité du liquide peut être comprise entre 0.0001 et 2 Pa.s à 25°C.

De préférence, le liquide constituant la goutte est choisi parmi de l'eau, notamment de l'eau de pluie, un liquide biologique, par exemple un sang animal ou humain, un liquide apte à nettoyer le support, une solution chimique, un carburant et leurs mélanges.

Dans un mode de réalisation, le support est recouvert de gouttes constituées d'un premier liquide et de gouttes constituées d'un deuxième liquide différent du premier, sans que l'efficacité du procédé ne soit diminuée.

En particulier, le liquide peut présenter un angle de contact avec le support inférieur à 180°, notamment inférieur à 120°. Le procédé selon l'invention peut ainsi favoriser le glissement d'une goutte disposée sur un support hydrophile ou hydrophobe.

Le liquide peut comporter des particules, par exemple des particules colloïdales. Il peut comporter un principe actif ou un médicament.

Lorsqu'elle est amenée à vibrer selon un mode inertio-capillaire, la goutte vibre en se déformant à basse fréquence, qui dépend notamment des propriétés, en particulier de la densité, du liquide constitutif de la goutte. De préférence, la fréquence de vibration selon le mode inertio-capillaire de la goutte est comprise entre 20 Hz et 10 kHz.

## ONDE DE SURFACE ULTRASONORE

La fréquence fondamentale et l'amplitude de l'onde ultrasonore de surface sont de préférence déterminées en fonction des propriétés du support et du liquide.

En particulier, L'homme du métier sait déterminer la longueur de transmission de l'onde ultrasonore de surface à un liquide posé sur le support, comme décrit dans J. Campbell and W. Jones, IEEE Trans. Sonics Ultrason., 17: 71 (1970), de préférence de sorte que le rapport de la taille de la goutte sur la longueur de transmission de l'onde ultrasonore de surface soit compris entre 0,04 et 10. Quant à l'amplitude de l'onde de surface ultrasonore, l'homme du métier sait l'adapter. Par exemple, une goutte d'un liquide de tension superficielle plus élevée qu'une goutte en un autre liquide nécessite l'application d'une amplitude plus élevée. Il en va de même pour une goutte de viscosité plus élevée.

De préférence, la fréquence fondamentale et l'amplitude de l'onde ultrasonore de surface sont adaptées pour que le rapport de l'amplitude d'oscillation de la goutte sur la taille au repos de la goutte est inférieur ou égal 1,4, voire inférieur ou égal à 1,3, voire même inférieur ou égal à 1,15. Par « amplitude d'oscillation» de la goutte, on entend le plus grand diamètre de la plus petite sphère circonscrite à la goutte, mesuré sur une période de vibration de la goutte, lorsqu'une onde acoustique de surface est appliquée au support.

Différents types d'ondes de surface ultrasonore peuvent être générés et sont adaptés notamment à la géométrie du support.

De préférence, l'onde de surface ultrasonore est une onde de Lamb ou une onde de Rayleigh. En particulier, elle peut être une onde de Rayleigh lorsque le support présente une épaisseur supérieure à la longueur d'onde de l'onde de surface ultrasonore. Une onde de Rayleigh est privilégiée car une proportion maximale de l'énergie de l'onde est concentrée sur la surface sur laquelle elle se propage, et peut être transmise à la goutte pour la faire vibrer.

De préférence, la fréquence fondamentale de l'onde ultrasonore de surface ultrasonore est comprise entre 1 Mhz et 100 Mhz. Dans un mode de réalisation, elle peut être comprise entre 5 Mhz et 40 Mhz, et notamment être égale à 20 Mhz.

Par ailleurs, la fréquence fondamentale de l'onde de surface ultrasonore peut être modulée à une fréquence de modulation comprise entre 20 Hz et 10 kHz, notamment pour optimiser en fonction de la taille de la goutte son régime vibratoire selon un mode inertio-capillaire. De préférence, la fréquence fondamentale de l'onde de surface est modulée par la fréquence propre du mode inertio-capillaire de vibration propre de la goutte. La fréquence propre $f_g$ de la goutte peut être déterminée approximativement à partir de la formule de Rayleigh-Lamb, décrite dans J. Rayleigh, Proc. R. Soc. London, vol. 29, 71 (1879) et de H. Lamb, « Hydrodynamics », Cambridge University Press, Angleterre (1932) :

$$f_g = \frac{1}{2\pi}\sqrt{\frac{n(n-1)(n+2)\sigma}{\rho\,R^3}}$$

où :

- n désigne l'ordre du mode de vibration, qui est par exemple égal à 2 dans le cas d'un mode de vibration quadripolaire,
- $\sigma$ est la tension superficielle, exprimée en N.m$^{-1}$,
- $\rho$ est la densité du liquide, exprimée en kg.m$^{-3}$, et
- $R$ est le rayon de courbure de la goutte qui dépend de son volume et de l'angle de contact, exprimé en m$^{-3}$.

En effet la fréquence propre $f_g$ ci-dessus est calculée pour une goutte de faible viscosité et en lévitation. Pour une goutte posée, le calcul de la fréquence propre doit être adapté en utilisant les modifications proposées par M. Strani and F. Sabetta, J. Fluid Mech., 141: 233-247 et dans le cas de liquides visqueux, les corrections à la formule ci-dessus décrites dans l'article de H. Lamb précité doivent être prises en compte.

La fréquence fondamentale peut être modulée au moyen d'une onde ayant un profil en créneau dont l'amplitude vaut 0 ou 1, et dont la fréquence est égale à la fréquence de modulation, ou via le produit de deux signaux harmoniques aux deux fréquences considérées.

Par ailleurs, l'amplitude de l'onde de surface ultrasonore est suffisante pour amener la goutte à se déformer selon un mode inertio-capillaire de vibration propre. De préférence, l'amplitude de l'onde ultrasonore de surface, qui correspond au déplacement normal de la surface du support sur laquelle se propage l'onde de surface ultrasonore et mesuré par interférométrie laser, est inférieure à 50 nm. Dans un mode de mise en œuvre particulier du procédé, elle peut être inférieure à 5 nm, voire inférieure à 1 nm, voire même inférieure à 0.5 nm.

Pour générer l'onde de surface ultrasonore, différents dispositifs, alimentés par une source de puissance électrique et optionnellement un amplificateur 18, peuvent être utilisés. Ils peuvent être choisis parmi un laser, un sonotone, un transducteur. De préférence, l'onde de surface ultrasonore est générée au moyen d'un transducteur relié au support, de préférence en contact avec le support.

Dans un mode de réalisation, le transducteur est un transducteur ultrasonique de contact, qui est particulièrement adapté à des applications où l'aire de la surface sur laquelle l'onde de surface ultrasonore de propage est supérieure à 10$^{-3}$ m$^2$. Pour optimiser la propagation de l'onde du transducteur vers la surface du support, un gel de transmission d'indice acoustique adapté en impédance peut être disposé en sandwich entre le transducteur acoustique et la surface.

Dans une première variante, comme cela est illustré sur la figure 1, notamment lorsque le substrat présente une épaisseur inférieure à la longueur de l'onde de surface ultrasonore et/ou que cette dernière est une onde de Lamb, le transducteur ultrasonique de contact 20a est de préférence disposé à angle droit avec la surface sur laquelle l'onde ultrasonore se propage. Un deuxième transducteur de même type peut être disposé sur la surface opposée à celle sur laquelle l'onde ultrasonore se propage.

Dans une deuxième variante, comme cela est illustré sur la figure 2, notamment lorsque le substrat présente une épaisseur supérieure à la longueur de l'onde de surface ultrasonore et/ou que cette dernière est une onde de Rayleigh, le transducteur ultrasonique de contact 20b est disposé, par exemple au moyen d'un sabot 25, de sorte que l'axe du transducteur forme un angle $\theta$ avec la normale à la surface sur laquelle l'onde de surface ultrasonore se propage, inférieur à 90° et dont la valeur peut être déterminée en utilisant la loi de Snell-Descartes.

Dans un autre mode de réalisation, notamment pour des applications où l'aire de la surface sur laquelle l'onde de surface ultrasonore de propage est inférieure à 10$^{-3}$ m$^2$ et en particulier des applications de type micro fluidique, le transducteur 20 comporte de préférence des peignes 30a, 30b interdigités disposés au contact direct du support ou au contact d'une couche intermédiaire disposée sur le support, la couche intermédiaire étant en un matériau piézoélectrique, en particulier choisi dans le groupe formé par le niobate de lithium, le nitrure d'aluminium, le titano-zircanate de plomb, et leurs mélanges. Les figures 3 et 4 illustrent des dispositifs selon ce mode de réalisation. Sur la figure 3, le support 5 est en matériau piézoélectrique et est recouvert par et au contact du transducteur. En variante, comme illustré sur la figure 4, le support 5 est un matériau non piezoélectrique, et est recouvert par une couche intermédiaire 35 en un matériau piézoélectrique. Un transducteur est disposé au contact de la couche intermédiaire.

Dans le cas d'un support présentant une aire de propagation de l'onde de surface élevée, par exemple supérieure à $10^{-3}$ m$^2$, ou lorsque la surface est recouverte par une pluralité de gouttes, une pluralité d'ondes de surface ultrasonores peut être générée au moyen d'un réseau de transducteurs. Un réseau de transducteurs permet ainsi de limiter les effets d'écrantage et de diffusion d'onde par chaque goutte individuelle de la pluralité de gouttes. L'homme du métier sait adapter la disposition des transducteurs du réseau de sorte à générer des ondes de surface ultrasonores présentant une amplitude suffisante pour amener les gouttes à se déformer selon un mode inertio-capillaire.

**FORCE EXTERNE**

La force externe permet de favoriser le glissement de la goutte qui vibre selon un mode propre inertio-capillaire.

En particulier, le glissement peut être obtenu avec une faible force externe. De préférence, la force externe est inférieure à la force nécessaire pour déplacer la goutte sur la surface du support lorsqu'aucune onde ultrasonore n'est générée en surface du support.

De préférence, la force externe est choisie parmi les forces gravitationnelle, inertielle, de réaction, de friction, magnétique, électrique, ou peut résulter de la mise en mouvement d'un fluide, par exemple de l'air, ou peut résulter du contact de la goutte avec un corps en mouvement. De préférence, elle est une force gravitationnelle, en particulier dans la variante où le support est incliné. Une force gravitationnelle présente l'avantage de ne nécessiter aucun dispositif particulier pour être appliquée à la goutte. La force externe peut bien entendu résulter d'une combinaison des forces externes décrites dans ce paragraphe.

A titre illustratif, dans le cas où le support est un pare-brise incliné d'un véhicule automobile, la force externe peut présenter une composante gravitationnelle et une composante aérodynamique résultant du mouvement du véhicule. A basse vitesse, la composante aérodynamique est plus faible que la composante gravitationnelle, si bien que la force externe agit pour favoriser le glissement de la goutte vers le bas. Au contraire, lorsque le véhicule circule à haute vitesse, la composante aérodnyamique peut devenir prépondérante, et la goutte glisse alors sous l'action de la force externe sur le pare-brise en direction du toit du véhicule.

**EXEMPLES**

Un dispositif tel qu'illustré sur la figure 3 est préparé pour mettre en œuvre le procédé selon l'invention.
Le support est incliné par rapport à l'horizontale d'un angle $\alpha$ compris entre 10 et 40°.

Le support est en niobiate de lithium coupe à 128°, sur lequel est disposé un transducteur comportant des électrodes interdigitées déposées par photolithographie. Ces électrodes sont constituées d'une couche d'accroche au support en titane de 20 nm d'épaisseur et d'une couche conductrice d'or d'une épaisseur de 100 nm. La largeur des électrodes et leur espacement $a$ sont tous deux égaux à 43,75 $\mu$m. Ils déterminent la fréquence de résonance $f_{saw}$ du transducteur calculée comme étant égale à $f_{saw} = \dfrac{c_s}{\lambda} = \dfrac{c_s}{4a} = 19,7$ MHz où $\lambda$ est la longueur d'onde de l'onde longitudinale et $c_s$ = 3484m/s est la vitesse de propagation de l'onde de Rayleigh selon l'axe cristallographique Z du niobiate de lithium. Une tension alternative est appliquée par un générateur IFR2023A et amplifiée par un amplificateur de marque Empower, modèle BBM0D3FE1 générant alors des ondes de Rayleigh se propageant en surface du support. La puissance acoustique de l'onde générée est calculée à partir de la mesure du déplacement normal de la surface par interférométrie laser et de la fréquence de l'onde.

Le transducteur est positionné sur le support de telle sorte que l'onde ultrasonore de surface se propage selon la direction d'inclinaison du support vers le haut.

Par ailleurs, une couche monoatomique d'octadécyltrichlorosilane est déposée sur la surface du support pour le rendre hydrophobe et pour contrôler l'angle de contact de la goutte avec le support.

Pour chaque essai, une goutte d'eau est déposée sur le support.

Différents volumes de goutte V sont utilisés pour les essais : 2 $\mu$l, 5 $\mu$l, 10 $\mu$l et 15 $\mu$l.

Au repos, sans application d'une onde ultrasonore de surface, la goutte est immobile sur la surface, quel que soit l'angle d'inclinaison du support.

Les ondes sont ensuite générées en continu. La goutte se met alors à vibrer et sa dynamique est enregistrée à l'aide d'une caméra ultra-rapide Photron SA3 équipée d'un soufflet et d'un objectif macro d'une longueur focale de 100 mm.

La position des lignes de contact est ensuite déterminée par traitement des images acquises par la caméra avec le logiciel imageJ, ce qui permet de vérifier si la goutte reste accrochée au support ou si elle en est libérée.

Pour les différents essais de l'exemple, des ondes de nombre de Weber acoustique $We_{ac}$ inférieur à 0,5 sont générées.

Le nombre de Weber acoustique $We_{ac}$ caractérise l'aptitude d'une onde ultrasonore de surface à déformer la surface. Il s'exprime selon l'équation suivante :

$$We_{ac} = \dfrac{\rho A_s^2 \omega_s^2 R}{\sigma \, cos^2 \theta_R}$$

où :

- $\rho$ est la masse volumique du liquide, exprimée en kg.m$^{-3}$,
- A$_s$ est l'amplitude de l'onde ultrasonore, correspondant au déplacement normal de la surface de l'onde mesuré par interférométrie laser, et exprimée en m,
- $\omega_s$ est la pulsation de l'onde ultrasonore, exprimée en rad.s$^{-1}$ ($\omega_s = 2\pi f_s$ où $f_s$ est la fréquence fondamentale de l'onde),
- $R = \left(\frac{3V}{2\pi}\right)^{\frac{1}{3}}$ est le rayon équivalent de la goutte calculé à partir du volume $V$ de la goutte, exprimé en m$^{-3}$,
- $\theta_R$ est l'angle de Rayleigh, obtenu à partir de la loi de Snell-Descartes, qui caractérise la direction de propagation de l'onde acoustique au sein du liquide constitutif de la goutte, et
- $\sigma$ est la tension superficielle entre le support et la goutte de liquide, exprimée en N.m$^{-1}$.

Quelle que soit l'inclinaison du support, pour une onde ultrasonore présentant un nombre de Weber acoustique $We_{ac}$ inférieur à 0,2, la goutte vibre selon un mode inertio-capillaire et elle est libérée de son accrochage au support. Elle glisse alors le long du support vers le bas, entraînée par l'action de la gravité.

A titre comparatif, lorsque le nombre de Weber est supérieur à 0,2, la déformation asymétrique de la goutte induite par l'onde de surface, est suffisante pour que celle-ci se déforme dans le sens de propagation de l'onde. Pour un faible angle d'inclinaison, elle se propage dans le sens de propagation de l'onde, en remontant le long du support. Pour un angle plus élevé, elle se propage dans le sens opposé.

Pour des nombres de Weber supérieur à 1, la déformation asymétrique de la goutte peut être telle que la goutte se scinde. Cette division de la goutte peut s'opérer par atomisation de la goutte ou à cause des effets opposés des forces gravitationnelle et acoustique.

Bien entendu, l'invention n'est pas limitée par les exemples, fournis à des fins illustratives seulement.

**Revendications**

1. Procédé pour favoriser le glissement d'au moins une goutte (15) sur un support (5), procédé dans lequel une onde de surface ultrasonore (10) est générée dans le support avec une amplitude suffisante pour amener la goutte à se déformer selon un mode inertio-capillaire de vibration propre réduisant ainsi l'accrochage de la goutte au support, de façon à faciliter le déplacement de la goutte sous l'effet d'une force externe, l'amplitude de l'onde de surface ultrasonore étant insuffisante pour entraîner une déformation asymétrique de la goutte au point de l'amener à se déplacer en l'absence de la force externe dans le sens de propagation de l'onde de surface ultrasonore.

2. Procédé selon la revendication précédente, dans lequel la fréquence fondamentale et l'amplitude de l'onde ultrasonore de surface sont adaptées pour que le rapport de l'amplitude d'oscillation de la goutte sur la taille au repos de la goutte est inférieur ou égal 1,4, voire inférieur ou égal à 1,3, voire même inférieur ou égal à 1,15, l'amplitude d'oscillation de la goutte étant le plus grand diamètre de la plus petite sphère circonscrite à la goutte, mesuré sur une période de vibration de la goutte, lorsqu'une onde acoustique de surface est appliquée au support.

3. Procédé selon l'une des revendications précédentes, dans lequel la fréquence fondamentale de l'onde de surface ultrasonore est comprise entre 1 Mhz et 100 Mhz.

4. Procédé selon l'une quelconque des revendications précédentes, dans lequel la fréquence fondamentale de l'onde de surface ultrasonore est modulée à une fréquence de modulation comprise entre 20 Hz et 10 kHz, la fréquence fondamentale de l'onde de surface étant de préférence modulée par la fréquence propre du mode symétrique inertio-capillaire de vibration propre de la goutte.

5. Procédé selon l'une quelconque des revendications précédentes, dans lequel l'onde de surface est une onde de Rayleigh ou une onde de Lamb.

6. Procédé selon l'une quelconque des revendications précédentes, dans lequel la goutte présente une taille ($\Phi$) inférieure à 5 mm, notamment comprise entre 0,1 mm et 1,5 mm, par exemple égale à 1 mm.

7. Procédé selon l'une quelconque des revendications précédentes, dans lequel la fréquence propre du mode inertio-capillaire de vibration propre de la goutte est comprise entre 20 Hz et 10 kHz.

8. Procédé selon l'une quelconque des revendications précédentes, dans lequel le support est en un matériau présentant un module d'élasticité supérieur à 0,1 MPa.

9. Procédé selon l'une quelconque des revendications précédentes, dans lequel le support est en un matériau choisi parmi les matériaux piézoélectriques, les polymères, en particulier les thermoplastiques, les verres, les métaux et les céramiques.

10. Procédé selon l'une quelconque des revendications précédentes, dans lequel l'onde de surface ultrasonore est générée au moyen d'un transducteur (20;20a;20b) relié au support, de préférence en contact avec le support, le transducteur comportant de préférence des peignes interdigités (30a;30b) disposés au contact direct du support ou au contact d'une couche intermédiaire (35) disposée sur le support, la couche intermédiaire étant en un matériau piézoélectrique, en particulier choisi dans le groupe formé par le niobate de lithium, le nitrure d'aluminium, le titano-zircanate de plomb, et leurs mélanges.

11. Procédé selon l'une quelconque des revendications précédentes, dans lequel la force externe est choisie parmi les forces gravitationnelle, inertielle, de réaction, magnétique, électrique, de friction, notamment résulte de la mise en mouvement d'un fluide, par exemple de l'air ou est une force gravitationnelle ou résulte du contact de la goutte avec un corps en mouvement.

12. Procédé selon l'une quelconque des revendications précédentes, dans lequel le liquide constituant la goutte est choisi parmi de l'eau, notamment de l'eau de pluie, un liquide biologique, par exemple un sang animal ou humain, un liquide apte à nettoyer le support, une solution chimique, un carburant et leurs mélanges.

13. Procédé selon l'une quelconque des revendications précédentes, dans lequel le support est en un matériau optiquement transparent.

14. Procédé selon l'une quelconque des revendications précédentes, dans lequel le support est choisi parmi un vitrage d'un véhicule, une vitre d'un bâtiment, une lentille d'un dispositif optique, un substrat d'un laboratoire sur puce, une paroi interne d'un moteur à combustion, un élément d'une turbine, par exemple une aube, un câble électrique, un élément de la structure d'un aéronef, par exemple une aile, un fuselage ou un empennage, un élément d'un implant médical, un élément d'un échangeur de chaleur, un élément d'une installation de plomberie, un élément d'un système de ventilation, un élément d'un système d'extraction de pétrole d'un puits, un élément de stockage de nourriture, par exemple une paroi interne d'un réfrigérateur, une paroi exposée à la condensation d'un liquide.

15. Procédé selon l'une quelconque des revendications précédentes, dans lequel la température de surface du support est supérieure à 100°C.

**Patentansprüche**

1. Verfahren zum Begünstigen des Gleitens mindestens eines Tropfens (15) auf einem Träger (5), bei dem eine Ultraschall-Oberflächenwelle (10) in dem Träger mit einer Amplitude erzeugt wird, die ausreicht, um den Tropfen zu veranlassen, sich gemäß einer inertial-kapillaren Eigenschwingungsmode zu verformen, wodurch die Haftung des Tropfens am Träger reduziert wird, so dass die Bewegung des Tropfens unter der Einwirkung einer äußeren Kraft erleichtert wird, wobei die Amplitude der Ultraschall-Oberflächenwelle nicht ausreicht, um eine asymmetrische Verformung des Tropfens in einem solchen Maße zu bewirken, dass er veranlasst wird, sich bei Nichtvorliegen der äußeren Kraft in die Ausbreitungsrichtung der Ultraschall-Oberflächenwelle zu bewegen.

2. Verfahren nach dem vorhergehenden Anspruch, bei dem die Grundfrequenz und die Amplitude der Ultraschall-Oberflächenwelle so angepasst sind, dass das Verhältnis der Schwingungsamplitude des Tropfens zur Größe des Tropfens im Ruhezustand kleiner oder gleich 1,4 oder sogar kleiner oder gleich 1,3 oder sogar kleiner oder gleich 1,15 ist, wobei die Schwingungsamplitude des Tropfens der größte Durchmesser der kleinsten in den Tropfen einbeschriebenen Kugel ist, der über eine Schwingungsperiode gemessen wird, wenn eine akustische Oberflächenwelle an den Träger angelegt ist.

3. Verfahren nach einem der vorhergehenden Ansprüche, bei dem die Grundfrequenz der Ultraschall-Oberflächenwelle zwischen 1 MHz und 100 MHz beträgt.

4. Verfahren nach einem der vorhergehenden Ansprüche, bei dem die Grundfrequenz der Ultraschall-Oberflächenwelle mit einer Modulationsfrequenz zwischen 20 Hz und 10 kHz moduliert wird, wobei die Grundfrequenz der Oberflächenwelle bevorzugt mit der Eigenfrequenz der symmetrischen inertial-kapillaren Eigenschwingungsmode des Tropfens moduliert wird.

5. Verfahren nach einem der vorhergehenden Ansprüche, bei dem die Oberflächenwelle eine Rayleigh-Welle oder eine Lamb-Welle ist.

6. Verfahren nach einem der vorhergehenden Ansprüche, bei dem der Tropfen eine Größe (Φ) von weniger als 5 mm, insbesondere zwischen 0,1 mm und 1,5 mm, beispielsweise von 1 mm aufweist.

7. Verfahren nach einem der vorhergehenden Ansprüche, bei dem die Eigenfrequenz der inertial-kapillaren Eigenschwingungsmode des Tropfens zwischen 20 Hz und 10 kHz beträgt.

8. Verfahren nach einem der vorhergehenden Ansprüche, bei dem der Träger aus einem Material ist, das einen Elastizitätsmodul von mehr als 0,1 MPa aufweist.

9. Verfahren nach einem der vorhergehenden Ansprüche, bei dem der Träger aus einem Material ist, das unter den piezoelektrischen Materialien, den Polymeren, insbesondere den Thermoplasten, den Gläsern, den Metallen und den Keramiken gewählt ist.

10. Verfahren nach einem der vorhergehenden Ansprüche, bei dem die Ultraschall-Oberflächenwelle mittels eines Wandlers (20; 20a; 20b) erzeugt wird, der mit dem Träger verbunden ist, bevorzugt mit dem Träger in Kontakt ist, wobei der Wandler bevorzugt interdigitale Kämme (30a; 30b) beinhaltet, die in direktem Kontakt mit dem Träger oder in Kontakt mit einer auf dem Träger angeordneten Zwischenschicht (35) angeordnet sind, wobei die Zwischenschicht aus einem piezoelektrischen Material ist, das insbesondere aus der Gruppe gewählt ist, die aus Lithiumniobat, Aluminiumnitrid, Blei-Zirkanat-Titanat und ihren Mischungen gebildet wird.

11. Verfahren nach einem der vorhergehenden Ansprüche, bei dem die äußere Kraft unter den Gravitations-, Trägheits-, Reaktions-, magnetischen, elektrischen, Reibungskräften gewählt ist, insbesondere aus dem Inbewegungversetzen eines Fluids, beispielsweise Luft, resultiert, oder eine Gravitationskraft ist oder aus dem Kontakt des Tropfens mit einem sich bewegenden Körper resultiert.

12. Verfahren nach einem der vorhergehenden Ansprüche, bei dem die Flüssigkeit, aus welcher der Tropfen besteht, unter Wasser, insbesondere Regenwasser, einer biologischen Flüssigkeit, beispielsweise tierischem oder menschlichem Blut, einer zum Reinigen des Trägers geeigneten Flüssigkeit, einer chemischen Lösung, einem Kraftstoff und ihren Mischungen gewählt ist.

13. Verfahren nach einem der vorhergehenden Ansprüche, bei dem der Träger aus einem optisch transparenten Material ist.

14. Verfahren nach einem der vorhergehenden Ansprüche, bei dem der Träger unter einer Verglasung eines Fahrzeugs, einer Glasscheibe eines Gebäudes, einer Linse einer optischen Vorrichtung, einem Substrat eines Chiplabors, einer Innenwand eines Verbrennungsmotors, einem Turbinenelement, beispielsweise einer Schaufel, einem Stromkabel, einem Element der Struktur eines Flugzeugs, beispielsweise einer Tragfläche, einem Rumpf oder einem Leitwerk, einem Element eines medizinischen Implantats, einem Element eines Wärmetauschers, einem Element einer Sanitärinstallation, einem Element eines Lüftungssystems, einem Element eines Erdölfördersystems eines Bohrlochs, einem Element zur Lagerung von Nahrung, beispielsweise einer Innenwand eines Kühlschranks, einer Wand, die der Kondensation einer Flüssigkeit ausgesetzt ist, gewählt ist.

15. Verfahren nach einem der vorhergehenden Ansprüche, bei dem die Oberflächentemperatur des Trägers mehr als 100 °C beträgt.

## Claims

1. A method for promoting sliding of at least one droplet (15) on a substrate (5), wherein an ultrasonic surface wave (10) is generated in the substrate with an amplitude sufficient to cause the droplet to be deformed according to an inertio-capillary eigenvibration mode thus reducing attachment of the droplet to the substrate, so as to facilitate movement of the droplet under the effect of an external force, the amplitude of the ultrasonic surface wave being insufficient to cause asymmetric deformation of the droplet to the point of causing it to move in the absence of the external force in the direction of propagation of the ultrasonic surface wave.

2. The method as claimed in the preceding claim, in which the fundamental frequency and the amplitude of the ultrasonic surface wave are adjusted so that the ratio of the amplitude of oscillation of the droplet to the size of the droplet at rest is less than or equal 1.4, or even less than or equal to 1.3, or even less than or equal to 1.15, the amplitude of oscillation of the droplet being the largest diameter of the smallest sphere circumscribing the droplet, measured over a period of vibration of the droplet, when a surface acoustic wave is applied to the substrate.

3. The method as claimed in one of the preceding claims, in which the fundamental frequency of the ultrasonic surface wave is between 1 MHz and 100 MHz.

4. The method as claimed in any one of the preceding claims, in which the fundamental frequency of the ultrasonic surface wave is modulated at a frequency of modulation between 20 Hz and 10 kHz, the fundamental frequency of the surface wave being preferably modulated by the natural frequency of the symmetric inertio-capillary eigenvibration mode of the droplet.

5. The method as claimed in any one of the preceding claims, in which the surface wave is a Rayleigh wave or a Lamb wave.

6. The method as claimed in any one of the preceding claims, in which the droplet has a size (Φ) less than 5 mm, notably between 0.1 mm and 1.5 mm, for example equal to 1 mm.

7. The method as claimed in any one of the preceding claims, in which the natural frequency of the inertio-capillary eigenvibration mode of the droplet is between 20 Hz and 10 kHz.

8. The method as claimed in any one of the preceding claims, in which the substrate is made of a material having an elastic modulus above 0.1 MPa.

9. The method as claimed in any one of the preceding claims, in which the substrate is made of a material selected from piezoelectric materials, polymers, in particular thermoplastics, glasses, metals and ceramics.

10. The method as claimed in any one of the preceding claims, in which the ultrasonic surface wave is generated by means of a transducer (20; 20a; 20b) connected to the substrate, preferably in contact with the substrate, the transducer comprising preferably interdigitated combs (30a; 30b) arranged in direct contact with the substrate or in contact with an intermediate layer (35) arranged on the substrate, the intermediate layer being made of a piezoelectric material, in particular selected from the group comprising lithium niobate, aluminum nitride, lead zirconate titanate, and mixtures thereof.

11. The method as claimed in any one of the preceding claims, in which the external force is selected from gravitational, inertial, reaction, magnetic, electrical, and frictional forces, and notably results from setting a fluid in motion, for example air, or is a gravitational force or results from contact of the droplet with a moving body.

12. The method as claimed in any one of the preceding claims, in which the liquid forming the droplet is selected from water, notably rain water, a biological fluid, for example animal or human blood, a liquid for cleaning the substrate, a chemical solution, a motor fuel and mixtures thereof.

13. The method as claimed in any one of the preceding claims, in which the substrate is made of an optically transparent material.

14. The method as claimed in any one of the preceding claims, in which the substrate is selected from glazing of a vehicle, a window pane of a building, a lens of an optical device, a substrate of a laboratory on a chip, an inside wall of a combustion engine, an element of a turbine, for example a blade, an electric cable, an element of the structure of an aircraft, for example a wing, a fuselage or a tail unit, an element of a medical implant, an element of a heat exchanger, an element of a plumbing installation, an element of a ventilation system, an element of a system for extracting oil from a well, a food storage element, for example an inside wall of a refrigerator, a wall exposed to condensation of a liquid.

15. The method as claimed in any one of the preceding claims, in which the surface temperature of the substrate is above 100°C.

Fig. 1

Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20140817666 A
- US 2014290732 A
- GB 2387107 A
- GB 1037787 A
- US 4768256 A
- FR 1308877
- WO 2012095643 A
- GB 2518136 A

**Littérature non-brevet citée dans la description**

- **M. BAUDOIN ; P. BRUNET ; O. BOU MATAR ; E. HERTH.** Low power sessile droplets actuation via modulated surface acoustic. *Appl. Phys. Lett.,* 2012, vol. 100, 154102
- **J. RAYLEIGH.** *Proc. R. Soc.,* vol. 29 (71), 1879
- **H. LAMB.** Hydrodynamics. Cambridge University Press, 1932
- **J. CAMPBELL ; W. JONES.** *IEEE Trans. Sonics Ultrason.,* 1970, vol. 17, 71
- **J. RAYLEIGH.** *Proc. R. Soc,* vol. 29, 71
- **M. STRANI ; F. SABETTA.** *J. Fluid Mech.,* vol. 141, 233-247